(19) Europäisches Patentamt
European Patent Office
Office européen des brevets

(11) Publication number: 0 152 256 B1

# (12) EUROPEAN PATENT SPECIFICATION

(45) Date of publication of patent specification: 09.05.90

(51) Int. Cl.[5]: C 08 F 2/52, G 02 B 1/10, C 08 J 7/18

(21) Application number: 85300739.1

(22) Date of filing: 04.02.85

## (54) Optical product having a thin surface film.

(30) Priority: 04.02.84 JP 19198/84

(43) Date of publication of application: 21.08.85 Bulletin 85/34

(45) Publication of the grant of the patent: 09.05.90 Bulletin 90/19

(84) Designated Contracting States: DE FR GB

(56) References cited:
GB-A-2 039 923
GB-A-2 107 895
US-A-4 091 166
US-A-4 096 315
US-A-4 143 949

(73) Proprietor: JAPAN SYNTHETIC RUBBER CO., LTD.
11-24, Tsukiji-2-chome Chuo-ku
Tokyo 104 (JP)

(72) Inventor: Yanagihara, Kenji
1-305, JSR-Shataku, 29, Aobadai-2-chome
Midori-ku Yokohama (JP)
Inventor: Itoh, Tetsuo
13-3, Naruse-1-chome
Machida-shi (JP)
Inventor: Kimura, Mituo
1-304, JSR-Shataku, 29, Aobadai-2-chome
Midori-ku Yokohama (JP)
Inventor: Niinomi, Masahiro
76-9, Kogasaka
Machida-shi (JP)

(74) Representative: Tubby, David George et al
MARKS & CLERK 57-60 Lincoln's Inn Fields
London WC2A 3LS (GB)

EP 0 152 256 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an optical product having a thin film on its surface.

It is desirable that many optical products (such as mirrors, lenses, plane or curved surface glass, prisms and the like) should be resistant to fogging due to the adhesion of water drops when they are used in a gas phase and resistant to the adhesion of air bubbles when they are used in a liquid phase such as water or the like. It is also desirable that they should be resistant to being stained by oils and fats and that stains due to oils and fats should be easily removable. One effective means of improving these properties is to impart hydrophilicity to the surfaces of optical products.

One method of imparting hydrophilicity to the surfaces of optical products comprises oxidizing an optical product in an oxygen plasma, which makes its surface hydrophilic. However, because of their high affinity for electrons, oxygen atoms or molecules are easily converted to negative ions in the plasma, and auto ionization occurs. Accordingly, the state of the oxygen plasma in the reaction vessel cannot be uniquely controlled by the energy supplied from outside (such as high frequency electric power, microwave electric power or the like) and it becomes instable because densely or sparsely ionized portions are formed and these portions vibrate. For these reasons, imparting hydrophilicity by mean of an oxygen plasma cannot easily apply a uniform treatment to a large surface area. In addition, this method has the disadvantages that the hydrophilicity imparted changes and deteriorates with the lapse of time.

Other methods are also known for imparting hydrophilicity to the surfaces of optical products such as: (1) the surface of an optical product is chemically modified by immersing an optical product composed of a polymer in a solution having a strong oxidizing effect or by introducing a hydrophilic functional group into molecules of a polymer which is later formed into an opticl product; or (2) the surface of an optical product is photo-oxidized by exposing an optical product composed of a polymer to ultraviolet light. However, all of these methods have drawbacks in that the materials usable for optical products are thereby restricted; the optical characteristics of the optical products are changed by the surface treatment; and the hydrophilicity imparted changes with the lapse of time.

We have now discovered how, by conducting plasma polymerization, to provide an optical product which overcomes the above-mentioned drawbacks and has on its surface a uniform thin film possessing excellent and stable hydrophilicity and not affecting the original optical characteristics of the optical product.

According to this invention, there is provided an optical product having on its surface a thin film obtained by subjecting a mixed gas comprising oxygen and a hydrocarbon compound having at least one double bond (hereinafter referred to simply as a hydrocarbon) to plasma polymerization in the presence of said optical product, thereby forming a thin film of a reaction product of said plasma polymerization (this film is hereinafter referred to as a plasma polymerization product film) on the surface of the optical product.

Hydrocarbons which may be used in this invention include unsaturated aliphatic hydrocarbons and cyclic unsaturated hydrocarbons.

The unsaturated aliphatic hydrocarbons may be represented by the general formula (A);

$$R^1—C(R^2)=(R^3)C—R^4 \qquad (A)$$

Wherein $R^1$, $R^2$, $R^3$ and $R^4$, which may be the same or different, each represents a hydrogen atom, an alkyl group (such as methyl, ethyl, propyl and the like) or an alkenyl group (such as vinyl, propenyl, allyl and the like), and examples include ethylene, propylene, 2-butene, isobutylene, 2-methyl-2-butene, 2,3-dimethyl-2-butene, 1-butene, 3-hexene, 2-ethyl-1-butene, 3-ethyl-3-hexene, 3,4-diethyl-3-hexene, 1,3-butadiene, 1,3,5-hexatriene, 2-vinyl-1,3-butadiene, 3-vinyl-1,3,5-hexatriene, 3,4-divinyl-1,3,5-hexatriene, 2-pentene, 2-methyl-1-butene, 2,3-dimethyl-2-pentene, 3-methyl-3-hexene, 3-ethyl-2-pentene, 3-methyl-4-ethyl-3-hexene, 2-methyl-3-ethyl-2-pentene, 2,3-dimethyl-3-hexene, isoprene, 1,3-pentadiene, 3-methyl-1,3-pentadiene, 4-methyl-1,3-pentadiene, 3,4-dimethyl-1,3-pentadiene, 3-methyl-1,3,5-hexatriene, 3-vinyl-1,3-pentadiene, 3-methyl-4-vinyl-1,3,5-hexatriene, 3-vinyl-4-methyl-1,3-pentadiene, 3,4-dimethyl-1,3,5-hexatriene, 1,3-hexadiene, 2-ethyl-1,3-butadiene, 3-ethyl-1,3-hexadiene, 4-ethyl-1,3-hexadiene, 3,4-diethyl-1,3-hexadiene, 3-vinyl-1,3-hexadiene, 3-ethyl-1,3,5-hexatriene, 3-ethyl-4-vinyl-1,3,5-hexatriene, 3,4-diethyl-1,3,5-hexatriene, 3-vinyl-4-ethyl-1,3-hexadiene, 3-methyl-1,3-hexadiene, 4-methyl-1,3-hexadiene, 3-ethyl-1,3-pentadiene, 3-ethyl-4-methyl-1,3-pentadiene, 3,4-dimethyl-1,3-hexadiene, 3-methyl-4-ethyl-1,3-hexadiene, 3-ethyl-4-methyl-1,3-hexadiene, 3-methyl-4-ethyl-1,3,5-hexatriene, 3-vinyl-4-methyl-1,3-hexadiene, 1,4-pentadiene, etc. Of these, ethylene, propylene, 1,3-butadiene, 1-butene, 2-butene and isobutylene are preferred.

The cyclic unsaturated hydrocarbons which may be used in this invention include aromatic hydrocarbons (such as benzene, toluene, ethylbenzene, propylbenzene, cumene, butylbenzene, xylene, ethyltoluene, cymene, diethylbenzene, triethylbenzene, tetramethylbenzene, styrene, methylstyrene, allylbenzene, divinylbenzene, 1-phenyl-1,3-butadiene and the like) and alicyclic unsaturated hydrocarbons (such as cyclopentene, cyclopentadiene, fulvene, cyclohexene, methylcyclohexene, cyclohexadiene, cyclobutene, cyclooctatetraene, menthene, limonene, di-pentene, terpinolene, terpenene, phellandrene, sylvestrene, carene, pinene, bornene and the like), of which we prefer benzene, styrene toluene, ethylbenzene, xylene, ethyltoluene, diethylbenzene and methylstyrene.

These hydrocarbons are plasma-polymerizable substances which can be gasified in a plasma reaction system. A single one or a mixture of two or more may be used.

In this invention, a mixed gas consisting of a hydrocarbon, and oxygen is used in the plasma polymerization. The mixed gas may also contain a quantity, preferably 80 mole % or less, more preferably 40 mole % or less, most preferably 20 mole % or less, of an inorganic gas other than oxygen such as, for example, hydrogen, carbon monoxide, carbon dioxide, water vapour, nitrogen, argon, helium, xenon, neon or the like. The molar ratio of the hydrocarbon to the oxygen is usualy from 0.1:1 to 10:1, preferably from 0.2:1 to 6:1, more preferably from 0.2:1 to 4:1. When the molar ratio is less than 0.1:1, the rate of formation of the plasma polymerization product film is too slow to use the method in practice, and moreover the plasma polymerization product film has poor durability. When the molar ratio exceeds 10:1, the plasma polymerization product film overall has insufficient hydrophilicity and there may exist localized areas having no hydrophilicity.

The optical products to which this invention can be applied are such optical products as utilize the transmission, refraction or reflection of light. They include, for example, mirrors having a convex surface, a concave surface, a plane surface or the like; lenses such as contact lenses, intraocular lenses, spectacle lenses, camera lenses, Fresnel lenses and the like; plane or curved surface glasses such as various window glasses and the like; and prisms such as prisms for single-lens reflex cameras, triangular prisms and the like. Of these optical products, those utilizing the transmission of refraction of light are commonly made from transparent, organic, high molecular weight compounds, such as polyalkyl or poly(halogenated alylkyl) acrylates or methacrylates [e.g. polymethyl methacrylate, polycyclohexyl methacrylate, polyperfluoroalkylethyl methacrylate], polyaryl or poly(halogenated aryl) acrylates or methacrylates [e.g. polyphenyl methacrylate, polyhalogenated phenyl methacrylate], polydiallyl compounds [e.g. polydiallyl diglycol carbonate, polydiallyl phthalate, polyadamantane diallyl], polyalkenyl or poly(halogenated alkenyl) compounds [e.g. polystyrene, polyhalogenated styrenes, polyvinyl chloride, polyvinylidene fluoridine, polyethylene], polydiacrylate compounds, polyimides, polyamides, polyurethanes and polysiloxanes; transparent, inorganic high molecular weight compounds such as silicones; inorganic glasses such as lead glass or quartz glass; or transparent metal oxides such as indium oxide, tin oxide, indium tin oxide; and the like. Optical products utilizing the reflection of a light are commonly made, for example, from materials having a mirror surface which may be produced by: vapour deposition of aluminium, tin, zinc, silver or the like; sputtering aluminium, tin, zinc, silver, nickel, copper or the like; or plating nickel, chromium or the like; however, these materials are not critical. For optical products utilizing the reflection of light, those plastics, metals, ceramics, etc. which are generally employed are used. For these optional products, formation of a plasma polymerization product film is conducted on the mirror surfaces of the products.

The optical products to which this invention is applied may first be subjected to various treatments at the respective optical surfaces in order to impart various intended functions to them. Such treatments include: (1) coating with various types of transparent polymers; and (2) treatment with a plasma of a gas such as a hydrocarbon compound, a halogenated hydrocarbon compound, an organosilicon compound, hydrogen, nitrogen, helium, neon, argon, xenon and the like, or a plasma of a mixed gas of two or more of these gases.

The plasma polymerization conditions (e.g. degree of vacuum inside the reaction vessel, flow rate of the mixed gas, electric power for discharging, etc.) are similar to those employed in conventional plasma polymerizations and are not critical. However, as an example, a degree of vacuum inside a reaction vessel of from 1 to mTorr to 10 Torr (0.1 to 1333 Pascals) may be used and a flow rate of a mixed gas of from 0.1 to 100 $cm^3$ (STP) may be used when the capacity of the reaction vessel is 50 litres. The electric power for discharging is preferably adjusted so that the electron temperature of the plasma, is measured by the method described in US 4,242,188, becomes from 5,000 to 80,000 K. When the electron temperature is less than 5,000 K, the rate of formation of the plasma polymerization product film is too low to use the method in practice. When the electron temperature exceeds 80,000 K, the hydrophilicity of the plasma polyerization product film varies depending upon the position of the film and the durability of the film is inferior. In order to impart a higher durability to the plasma polymerization product film, the electric power for discharging is more preferably adjusted so that the electron temperature becomes 5,000 to 60,000 K. The plasma polymerization time varies depending upon the thickness of the plasma polymerization product film to be formed on the optical product. The plasma polymerization product film thickness is not critical; however, a thickness of from 1 to 5,000 Angstroms (0.1 to 500 nm) is usually sufficient. Hence, the plasma polymerization can be completed in a short time, for example, about 10 minutes.

The invention is further illustrated with reference to the accompanying drawings, in which:

Figures 1 and 2 show apparatus which may be used for the plasma polymerization of the present invention; and

Figure 3 shows apparatus which may be used to examine the reduction in the beam-condensing ability of a convex lens owing to adhesion of water droplets to its surface.

In the plasma polymerization of this invention, apparatus as shown on Figure 1, for example, may be used. In this apparatus, a reaction vessel 1 connected to a vacuum pump (not shown in Figure 1) is provided at an end having a small diameter with a coil 2; to the coil 2 is connected to a high frequency power source 3; and an optical prodcut S is supported on a supporting table 4 placed inside the reaction

vessel 1. While evacuating the inside of the reaction vessel 1 by the vacuum pump, a mixed gas of a hydrocarbon and oxygen is introduced into the reaction vessel 1 through a gas inlet 5, and a high frequency voltage is then applied to the coil 2 from the power source 3 to generate a plasma inside the reaction vessel 1 and to allow the plasma to act upon the outer surface of the optical product S, thereby forming a plasma polymerization product film on the surface of the optical product S.

The apparatus shown in Figure 2 may also be used. In this apparatus, a pair of electrodes 11 and 11′ facing each other are provided inside a reaction vessel 10 constituted by a bell jar; between the electrodes 11 and 11′ is held an optical product S; to the electrodes 11 and 11′ is connected, for example, an AC power source 12 to generate a plasma between the electrodes 11 and 11′; the plasma is allowed to act upon the outer surface of the optical product S; thereby forming on the surface of the optical product S a plasma polymerization product film derived from the mixed gas of a hydrocarbon and oxygen. In Figure 2, 13 is an exhaust gas pipe and 14 and 14′ are conduits for reaction gas.

The apparatus used for the plasma polymerization of this invention is not restricted to those shown in Figures 1 and 2. For example, in the apparatus, the power source for plasma generation may be DC or AC. When an alternating current is used, it may be of a low frequency, a high frequency or a microwave. In the case of a microwave, the method of coupling the amplifier with the plasma system may be of the ladder type, the cavity type or the like. Further, the plasma-generating electrodes may be of the induction type, the capacity type or the like and this is not critical.

The optical product having a thin film on its surface produced according to this invention has the following advantages:

(1) The surface of the optical product has high hydrophilicity and, accordingly, the optical product has excellent resistance to fogging due to adhesion of water drops, resistance to adhesion of air bubbles in the liquid phase, resistance to staining due to oils and fats, removability of stains due to oils and fats, etc.

(2) These characteristics do not change with the lapse of time, and the optical product also has excellent durability.

(3) When the optical product is a contact lens, in actual use, it has a good visual field, has excellent movability on the eyeball and ensures good oxygen supply to the cornea.

(4) When the optical product is an intraocular lens, any reduction in transparency due to adsorption of proteins, etc. is very low during the application of the lens.

The invention is further illustrated by the following Examples.

Example 1

A reaction vessel as shown in Figure 2 was used. On a supporting table in the reaction vessel was placed a polystyrene len. A mixed gas of ethylene (as the hydrocarbon) and oxygen at an ethylene flow rate of 7.5 $cm^3$ (STP)/minute and an oxygen flow rate of 10 $cm^3$ (STP)/miunute was introduced into the vessel while keeping the inside of the vessel at a degree of vacuum of 50 mTorr (6.6 Pascals) and applying an alternating current of 10 KHz between the two electrodes to generate a plasma having an electron temperature of 25,000 $\pm$ 3,000 K, whereby a reaction was allowed to take place over a period of 10 minutes and a plasma polymerization product film was formed on the surface of the polystyrene lens. In this case, the electron temperature of the plasma was measured using a heated probe (not shown in Figure 2).

The contact angle of water on the surface of the polystyrene lens having a thin film on its surface obtained by the above plasma polymerization was measured by the water drop method. The change of the contact angle of water with the lapse of time was also measured for the same sample. The results are shown in Table 1.

The thickness of the plasma polymerization product film formed was determined by placing, at the time of plasma polymerizatipon, a silicon wafer next to the polystyrene lens and measuring the thickness of the plasma polymerization product film on the silicon wafer after plasma polymerization by the use of an ellipsometer (GAERTENER — trade mark — ELLIPSOMETER L Model 117). The thickness was 400 $\pm$ 100 Ångstroms (40 $\pm$ 10 nm).

Comparative Example 1

The contact angle of water and its change with time were measured for the same polystyrene lens as was used in Example 1, but before plasma polymerization and having no thin film on its surface. The results are shown in Table 1.

Example 2

Plasma polymerization was conducted in the same manner as in Example 1, except that the mixing ratio of ethylene and oxygen was changed to 5:1, whereby a polystyrene lens having a thin film on its surface was obtained. For this lens, the contact angle of water on the surface of the lens and its change with the lapse of time were measured. The results are shown in Table 1.

Comparative Example 2

A plasma was allowed to act upon the surface of a polystyrene lens in the same manner as in Example 1, except that the flow rate of ethylene was changed to 0 $cm^3$ (STP)/minute. For the resulting polystyrene

lens, the contact angle of water and its change with the lapse of time were measured. The results are shown in Table 1.

Comparative Example 2

Plasma polymerization was conducted in the same manner as in Example 1, except that only ethylene [7.5 $cm^3$ (STP)/minute] and no oxygen was used. Then, the ethylene supply was stopped and oxygen was allowed to flow at a rate of 10 $cm^3$ (STP)/minute, to allow the plasma to act upon the polystyrene lens. For the resulting polystyrene lens, the contact angle of water and its change with the lapse of time were measured. The results are shown in Table 1.

Example 3

Plasma polymerization was conducted in the same manner as in Example 1, except that the mixing ratio (molar ratio) of ethylene to oxygen was changed to 0.2:1, whereby a polystyrene lens having a thin film on its surface was obtained. For the polystyrene lens, the contact angle of water and its change with the lapse of time were measured. The results are shown in Table 1.

Example 4

Plasma polymerization was conducted in the same manner as in Example 1, except that the mixing ratio (molar ratio) of ethylene to oxygen was changed to 4:1, whereby a polystyrene lens having a thin film on its surface was obtained. For the polystyrene lens, the contact angle of water and its change with the lapse of time were measured. The results are shown in Table 1.

Example 5

Plasma polymerization was conducted in the same manner as in Example 1, except that propylene was used as the hydrocarbon and the mixing ratio (molar ratio) of propylene to oxygen was 0.75:1, whereby a polystyrene lens having a thin film on its surface was obtained. For the polystyrene lens, the contact angle of water and its change with the lapse of time were measured. The results are shown in Table 1.

Example 6

Plasma polymerization was conducted in the same manner as in Example 1, except that 1,3-butadiene was used as the hydrocarbon and the mixing ratio (molar ratio) of 1,3-butadiene to oxygen was 0.75:1, whereby a polystyrene lens having a thin film on its surface was obtained. For the polystyrene lens, the contact angle of water and its change with the lapse of time were measured. The results are shown in Table 1.

Example 7

Plasma polymerization was conducted in the same manner as in Example 1, except that 1-butene was used as the hydrocarbon and the mixing ratio (molar ratio) of 1-butene to oxygen was 0.75:1, whereby a polystyrene lens having a thin film on its surface was obtained. For the polystyrene lens, the contact angle of water and its change with the lapse of time were measured. The results are shown in Table 1.

Example 8

Plasma polymerization was conducted in the same manner as in Example 1, except that isobutylene was used as the hydrocarbon and the mixing ratio (molar ratio) of isobutylene to oxygen was 0.75:1, whereby a polystyrene lens having a thin film on its surface was obtained. For the polystyrene lens, the contact angle of water and its change with the lapse of time were measured. The results are shown in Table 1.

Example 9

Plasma polymerization was conducted in the same manner as in Example 1, except that benzene was used as the hydrocarbon and the mixing ratio (molar ratio) of benzene to oxygen was 0.75:1, whereby a polystyrene lens having a thin film on its surface was obtained. For the polystyrene lens, the contact angle of water and its change with the lapse of time were measured. The results are shown in Table 1.

Example 10

Plasma polymerization was conducted in the same manner as in Example 1, except that styrene was used as the hydrocarbon and the mixing ratio (molar ratio) of styrene to oxygen was 0.75:1, whereby a polystyrene lens having a thin film on its surface was obtained. For the polystyrene lens, the contact angle of water and its change with the lapse of time were measured. The results are shown in Table 1.

Example 11

Plasma polymerization was conducted in the same manner as in Example 1, except that an equimolar mixture of ethylene and benzene was used as the hydrocarbon and the mixing ratio (molar ratio) of the ethylene-benzene mixture to oxygen was 0.75:1, whereby a polystyrene lens having a thin film on its surface was obtained. For the polystyrene lens, the contact angle of water and its change with the lapse of time were measured. The results are shown in Table 1.

Table 1

| | Contact angle (θ°) | | | | | | | | |
|---|---|---|---|---|---|---|---|---|---|
| | Days elapsed | | | | | | | | |
| | 0 | 3 | 7 | 10 | 14 | 30 | 60 | 90 | 180 |
| Example 1 | 14 | 14 | 16 | 15 | 14 | 15 | 17 | 14 | 17 |
| " 2 | 26 | 28 | 27 | 24 | 26 | 27 | 25 | 26 | 24 |
| " 3 | 16 | 15 | 13 | 14 | 15 | 13 | 15 | 16 | 14 |
| " 4 | 14 | 14 | 13 | 16 | 15 | 15 | 14 | 13 | 16 |
| " 5 | 17 | 16 | 19 | 18 | 16 | 18 | 17 | 19 | 17 |
| " 6 | 16 | 16 | 14 | 14 | 16 | 15 | 16 | 15 | 15 |
| " 7 | 19 | 19 | 19 | 17 | 19 | 18 | 18 | 18 | 17 |
| " 8 | 17 | 18 | 18 | 16 | 18 | 17 | 16 | 18 | 18 |
| " 9 | 17 | 17 | 19 | 18 | 16 | 17 | 15 | 17 | 18 |
| " 10 | 16 | 15 | 15 | 14 | 16 | 15 | 16 | 17 | 14 |
| " 11 | 15 | 15 | 14 | 16 | 17 | 17 | 18 | 16 | 16 |
| Comparative Example 1 | 87 | 89 | 90 | 88 | 88 | 91 | 89 | 92 | 89 |
| " 2 | 15 | 22 | 31 | 29 | 36 | 45 | 43 | 46 | 51 |
| " 3 | 17 | 23 | 28 | 30 | 37 | 43 | 45 | 49 | 55 |

Example 12 and Comparative Example 4

Plasma polymerization was conducted in the same manner as in Example 1, except that the polystyrene lens was replaced by (a) a contact lens produced by cutting a poly(methyl methacrylate) plate or (b) a disc produced by the same procedure as in the case of the contact lens, whereby a contact lens and a disc each having a thin film on its surface were obtained. The contact lens and the disc were tested for the following six items.

For Comparative Example 4, the original contact lens and the disc (having no thin film on their surfaces) were tested for the same six items.

The results are shown in Table 2.

(1) Removability of stains due to oils and fats

A dried contact lens was immersed in water for 5 seconds. Then, a cold cream was coated on the contact lens. The contact lens was held between the thumb and forefinger, washed with water and then taken out of the water to observe the adhesion of water drops to the contact lens. When the contact lens had no oil and was well wetted with water, it was rated as O. When the contact lens had an an oil residue and repelled water, it was rated as X.

(2) Hydrophilicity

A dried contact lens was immersed in water for 5 seconds. Then, it was taken out of the water to observe the adhesion of water to the contact lens. When the contact lens was well wetted with water, it was rated as O. When the contact lens repelled water, it was rated as X.

(3) Visual field in actual use

The visual field of a contact lens in actual use was rated. When the visual field was good, it was rated as O. When the visual field was cloudy, the contact lens was rated as X.

(4) Movability on eye ball in actual use

The movability of a contact lens in use by blinking was rated. When the contact lens moved well, it was rated as O. When the lens did not move well, it was rated as X.

(5) Durability of lens surface

A contact lens was held between the thumb and forefinger, rubbed 2,000 times in water and then taken out of the water to observe the adhesion of water to the contact lens. When the whole surface of the contact lens was well wetted with water, it was rated as O. When the surface repelled water, it was rated as X.

(6) Change of contact angle with time

The change of the contact angle of water with time was measured for a disc which had been allowed to stand in air.

Example 13 and Comparative Example 5

Plasma polymerization was conducted in the same manner as in Example 1, except that the polystyrene lens was replaced by a soft contact lens and a disc both produced by polymerizing a mixture consisting of 300 ml of acrylic acid, 280 ml of butyl methacrylate, 30 ml of ethylene glycol methacrylate and 6 ml of benzoin, cutting the resulting polymer into the shapes of a contact lens and a disc subjecting the shaped articles to esterification in butyl alcohol, thereby obtaining a soft contact lens and a disc each having a thin film on its surface. The soft contact lens and the disc were treated in the same manner as in Example 12.

Example 12

In Comparative Example 5, the soft contact lens and the disc before plasma polymerization of Example 13 were tested in the same manner as in Example 13.

The results are shown in Table 2.

Example 14

Plasma polymerization was conducted in the same manner as in Example 1, except that the polystyrene lens was replaced by a contact lens and a disc both produced by cutting a poly(methyl methacrylate) plate and the ethylene was replaced by 1,3-butadiene, thereby obtaining a contact lens and a disc each having a thin film on its surface. The contact lens and the disc were treated in the same manner as in Example 12. The results are shown in Table 2.

Table 2

| Test item | | Example 12 | Comparative Example 4 | Example 13 | Comparative Example 5 | Example 14 |
|---|---|---|---|---|---|---|
| (1) Removability of stains due to oils and fats | ○ | 10/10 | 0/10 | 10/10 | 0/10 | 10/10 |
| | X | 0/10 | 10/10 | 0/10 | 10/10 | 0/10 |
| (2) Hydrophilicity | ○ | 10/10 | 0/10 | 10/10 | 0/10 | 10/10 |
| | X | 0/10 | 10/10 | 0/10 | 10/10 | 0/10 |
| (3) Visual field in actual use | ○ | 10/10 | 9/10 | 10/10 | 1/10 | 10/10 |
| | X | 0/10 | 1/10 | 0/10 | 9/10 | 0/10 |
| (4) Movability on eye ball in actual use | ○ | 10/10 | 3/10 | 10/10 | 0/10 | 10/10 |
| | X | 0/10 | 7/10 | 0/10 | 10/10 | 0/10 |
| (5) Durability of surface | ○ | 10/10 | 0/10 | 10/10 | 0/10 | 10/10 |
| | X | 0/10 | 10/10 | 0/10 | 10/10 | 0/10 |
| (6) Change of contact angle with the lapse of time (θ°) | 0 day | 16 | 92 | 18 | 88 | 14 |
| | 30 days | 18 | 90 | 20 | 90 | 18 |
| | 60 days | 18 | 90 | 20 | 90 | 18 |
| | 90 days | 19 | 92 | 20 | 89 | 20 |
| | 180 days | 19 | 89 | 22 | 92 | 18 |

Note: On test items (1)-(5), ten samples were tested in each case, and the results are shown by the number of samples rated as ○ or X.

Example 15

The same procedure as in each of Examples 1 to 11 was repeated, except that the polystyrene lens was replaced by a polycarbonate convex lens with a focal distance of 5 cm and plasma polymerization was effected under the same conditions as in each of Examples 1 to 11, thereby obtaining 11 different convex lenses each having a thin film on its surface. These convex lenses were kept for 10 minutes at a constant temperature of 50°C and a constant humidity of 90% and then taken out into an atmosphere at 20°C and a humidity of 40% to examine the degree of reduction in the beam-condensing ability ot each lens due to adhesion of water drops to the surface of the lens. The results are shown in Table 3.

Comparative Example 6

The same procedure as in each of Comparative Examples 1 to 3 was repeated, except that the polystyrene lens was replaced by a polycarbonate convex lens having a focal length of 5 cm, thereby obtaining 3 different convex lenses. These convex lenses were treated in the same manner as in Example 15.

The results are shown in Table 3.

Table 3

| | Plasma conditions | Beam-condensing ability of lens *2 (Unit: arbitrary) | | |
|---|---|---|---|---|
| | | After 1 min | After 2 min | After 5 min |
| Example 15 | Example 1 | 10 | 9 | 10 |
| | " 2 | 10 | 9 | 9 |
| | " 3 | 10 | 10 | 10 |
| | " 4 | 10 | 10 | 10 |
| | " 5 | 10 | 9 | 10 |
| | " 6 | 10 | 10 | 10 |
| | " 7 | 10 | 9 | 10 |
| | " 8 | 10 | 9 | 9 |
| | " 9 | 10 | 9 | 9 |
| | " 10 | 10 | 10 | 10 |
| | " 11 | 10 | 9 | 10 |
| Comparative Example 6 | Comparative *1 Example 1 | 4 | 2 | 3 |
| | " 2 | 6 | 4 | 3 |
| | " 3 | 6 | 3 | 3 |

Note: *1 Plasma treatment was not conducted.

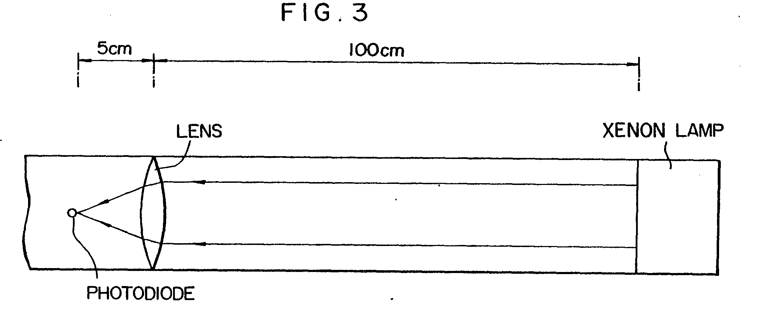

*2 Using a cylindrical measurement apparatus having a section as shown in Fig. 3 whose inside surface is made black, light beams from a xenon lamp were condensed by a convex lens; the intensity of the condensed beams was measured by a photodiode; and the out-put voltage of the photodiode circuit was taken as the beam-condensing ability of the convex lens.

Example 16

Plasma polymerization was conducted in the same manner as in Example 1, except that the polystyrene lens was replaced by a poly(methyl methacrylate) intraocular lens or a poly(methyl methacrylate) disc, thereby obtaining an intraocular lens and a disc each having a thin film on its surface.

Cornea lenses were surgically removed from the eye balls of male rabbits weighing 3.0 to 3.5 kg and into each atrium of the eye balls of these rabbits was inserted the intraocular lens obtained above. After 3 months and 6 months of use, the intraocular lens was removed, water-washed, dried and measured for the transmission of visible light to compare the stain of the intraocular lens before and after use. In this use test, 4 eyes (2 rabbits) were used for each measurement.

The transmission of visible light was measured using a double beam spectrophotometer, fixing an intraocular lens to a particular cell of 34 mm in height, 13 mm in width and 2 mm in thickness having a hole of 5 mm in diameter at the centre, and measuring the transmission of light through the intraocular lens at 500 nm. The transmission of the intraocular lens before use was taken as 100, and the transmissions after 3 months and 6 months of uses were reported as the respective percentages relative to the transmission before use. The results are shown in Table 4.

For the above obtained disc having a thin film on its surface, the contact angle of water and its change with the lapse of time in air were measured. The results are shown in Table 5.

Comparative Example 7

Using the same poly(methyl methacrylate) intraocular lens and the same poly(methyl methacrylate) disc as in Example 16 on which a plasma polymerization product film had not been formed, the change in the transmission of visible light in actual use by rabbits as well as the contact angle of water and its change with time were measured in the same manner as in Example 16. The respective results are shown in Table 4 and Table 5.

Example 17

Plasma polymerization was conducted in the same manner as in Example 16, except that the mixing ratio (molar ratio) of ethylene to oxygen was changed to 5:1, thereby obtaining a intraocular lens and a poly(methyl methacrylate) disc each having a thin film on its surface. For the lens and the disc, the change in the transmission of visible light in actual use by rabbits as well as the contact angle of water and its change with time were measured in the same manner as in Exmple 16. The respective results are shown in Table 4 and Table 5.

Comparative Example 8

A plasma was allowed to act in the same manner as in Example 16, except that the flow rate of ethylene was changed to 0 $cm^3$ (STP)/minute. For the poly(methyl methacrylate) intraocular lens and the poly(methyl methacrylate) disc thus obtained, the change of the transmission of a visible light in actual use by rabbits as well as the contact angle of water and its change with time were measured in the same manner as in Example 16. The respective results are shown in Table 4 and Table 5.

Comparative Example 9

Plasma polymerization was conducted in the same manner as in Example 16, except that only ethylene was used at a flow rate of 7.5 $cm^3$ (STP)/minute). Then, the supply of ethylene was stopped and oxygen was supplied at a flow rate of 10 $cm^3$ (STP)/minute to allow an oxygen plasma to act, to obtain a poly(methyl methacrylate) intraocular lens and the poly(methyl methacrylate) disc each having a thin film on its surface. For the lens and the disc, the change in the transmission of visible light in actual use by rabbits as well as the contact angle of water and its change with the time were measured in the same manner as in Example 16. The respective results are shown in Table 4 and Table 5.

Table 4

| | Transmission of a visible light (%) | | |
|---|---|---|---|
| | Before use | After 3 months of use | After 6 months of use |
| Example 16 | 100 | 98 | 97 |
| " 17 | 100 | 97 | 97 |
| Comparative Example 7 | 100 | 92 | 82 |
| " 8 | 100 | 96 | 84 |
| " 9 | 100 | 94 | 81 |

Table 5

| | Contact angle (θ°) | | | | |
|---|---|---|---|---|---|
| | Days elapsed | | | | |
| | 0 | 30 | 60 | 90 | 180 |
| Example 16 | 16 | 18 | 18 | 17 | 19 |
| " 17 | 24 | 26 | 29 | 26 | 27 |
| Comparative Example 7 | 69 | 68 | 72 | 70 | 69 |
| " 8 | 14 | 33 | 48 | 52 | 56 |
| " 9 | 16 | 30 | 44 | 53 | 57 |

**Claims**

1. An optical product having on its surface a thin film obtained by subjecting a mixed gas comprising oxygen and a hydrocarbon compound having at least one double bond to plasma polymerization in the presence of said optical product, thereby forming a thin film of a reaction product of said plasma polymerization on the surface of the optical product.

2. An optical product according to Claim 1, wherein the hydrocarbon compound is an unsaturated aliphatic hydrocarbon represented by the general formula:

$$R^1—C(R^2)=(R^3)C—R^4$$

wherein $R^1$, $R^2$, $R^3$ and $R^4$, which may be the same or different, each represents a hydrogen atom, an alkyl group or an alkenyl group.

3. An optical product according to Claim 2, wherein the unsaturated aliphatic hydrocarbon is at least one of ethylene, propylene, 2-butene, isobutylene, 2-methyl-2-butene, 2,3-dimethyl-2-butene, 1-butene, 3-hexene, 2-ethyl-1-butene, 3-ethyl-3-hexene, 3,4-diethyl-3-hexene, 1,3-butadiene, 1,3,5-hexatriene, 2-vinyl-1,3-butadiene, 3-vinyl-1,3,5-hexatriene, 3,4-divinyl-1,3,5-hexatriene, 2-pentene, 2-methyl-1-butene, 2,3-dimethyl-2-pentene, 3-methyl-3-hexene, 3-ethyl-2-pentene, 3-methyl-4-ethyl-3-hexene, 2-methyl-3-ethyl-2-pentene, 2,3-dimethyl-3-hexene, isoprene, 1,3-pentadiene, 3-methyl-1,3-pentadiene, 4-methyl-1,3-pentadiene, 3,4-dimethyl-1,3-pentadiene, 3-methyl-1,3,5-hexatriene, 3-vinyl-1,3-pentadiene, 3-methyl-4-vinyl-1,3,5-hexatriene, 3-vinyl-4-methyl-1,3-pentadiene, 3,4-dimethyl-1,3,5-hexatriene, 1,3-hexadiene, 2-ethyl-1,3-butadiene, 3-ethyl-1,3-hexadiene, 4-ethyl-1,3-hexadiene, 3,4-diethyl-1,3-hexadiene, 3-vinyl-1,3-hexadiene, 3-ethyl-1,3,5-hexatriene, 3-ethyl-4-vinyl-1,3,5-hexatriene, 3,4-diethyl-1,2,5-hexatriene, 3-vinyl-4-ethyl-1,3-hexadiene, 3-methyl-1,3-hexadiene, 4-methyl-1,3-hexadiene, 3-ethyl-1,3-pentadiene, 3-ethyl-4-methyl-1,3-pentadiene, 3,4-dimethyl-1,3-hexadiene, 3-methyl-4-ethyl-1,3-hexadiene, 3-ethyl-4-methyl-1,3-hexadiene, 3-methyl-4-ethyl-1,3,5-hexatriene, 3-vinyl-4-methyl-1,3-hexadiene and 1,4-pentadiene.

4. An optical product according to Claim 1, wherein the hydrocarbon compound is a cyclic unsaturated hydrocarbon.

5. An optical product according to Claim 4, wherein the cyclic unsaturated hydrocarbon is an aromatic hydrocarbon.

6. An optical product according to Claim 5, wherein the aromatic hydrocarbon is at least one of benzene, toluene, ethylbenzene, propylbenzene, cumene, butylbenzene, xylene, ethyltoluene, cymene, diethylbenzene, trimethylbenzene, tetramethylbenzene, styrene, methylstyrene, allylbenzene, divinylbenzene and 1-phenyl-1,3-butadiene.

7. An optical product according to Claim 4, wherein the cyclic unsaturated hydrocarbon is an alicyclic unsaturated hydrocarbon.

8. An optical product according to Claim 7, wherein the alicyclic hydrocarbon is at least one of cyclopentene, cyclopentadiene, fulvene, cyclohexene, methylcyclohexene, cyclohexadiene, cyclobutene, cyclooctatetraene, menthene, limonene, di-pentene, terpinolene, terpenene, phellandrene, sylvestrene, carene, pinene and bornene.

9. An optical product according to any one of the preceding Claims, wherein the molar ratio of the hydrocarbon compound to oxygen is from 0.1:1 to 10:1.

10. An optical product according to any one of the preceding Claims, wherein the mixed gas comprises 80 mole % or less of an inorganic gas other than oxygen.

11. An optical product according to any one of the preceding Claims which relies upon the transmission, refraction of reflection of light.

12. An optical product according to Claim 11 which is a contact lens or an intraocular lens.

**Patentansprüche**

1. Optisches Erzeugnis mit einem dünnen Oberflächenfilm, erhalten durch eine Plasmapolymerisation einer Gasmischung, welche Sauerstoff und eine mindestens eine Doppelbindung enthaltende Kohlenwasserstoffverbindung umfaßt, wobei ein dünner Film aus einem Reaktionsprodukt der Plasmapolymerisation auf der Oberfläche des optischen Erzeugnisses gebildet wird.

2. Optisches Erzeugnis nach Anspruch 1, worin die Kohlenwasserstoffverbindung ein ungesättigter aliphatischer Kohlenwasserstoff der allgemeinen Formel ist:

$$R^1—C(R^2)=(R^3)C—R^4$$

wobei $R^1$, $R^2$, $R^3$ und $R^4$, welche gleich oder verschieden sein können, jeweils ein Wasserstoffatom, eine Alkyl- oder eine Alkenylgruppe repräsentieren.

3. Optisches Erzeugnis nach Anspruch 2, worin der ungesättigte aliphatsiche Kohlenwasserstoff mindestens einer aus der Reihe Ethylen, Propylen, 2-Buten, Isobutylen, 2-Methyl-2-buten, 2,3-Dimethyl-2-buten, 1-Buten, 3-Hexen, 2-Ethyl-1-buten, 3-Ethyl-3-hexen, 3,4-Diethyl-3-hexen, 1,3-Butadien, 1,3,5-Hexatrien, 2-Vinyl-1,3-butadien, 3-Vinyl-1,3,5-hexatrien, 3,4-Divinyl-1,3,5-hexatrien, 2-Penten, 2-Methyl-1-buten, 2,3-Dimethyl-2-penten, 3-Methyl-3-hexen, 3-Ethyl-2-penten, 3-Methyl-4-ethyl-3-hexen, 2-Methyl-3-ethyl-2-penten, 2,3-Dimethyl-3-hexen, Isopren, 1,3-Pentadien, 3-Methyl-1,3-pentadien, 4-Methyl-1,3-pentadien, 3,4-Dimethyl-1,3-pentadien, 3-Methyl-1,3,5-hexatrien, 3-Vinyl-1,3-pentadien, 3-Methyl-4-vinyl-1,3,5-hexatrien, 3-Vinyl-4-methyl-1,3-pentadien, 3,4-Dimethyl-1,3,5-hexatrien, 1,3-Hexadien, 2-Ethyl-1,3-butadien, 3-Ethyl-1,3-hexadien, 4-Ethyl-1,3-hexadien, 3,4-Diethyl-1,3-hexadien, 3-Vinyl-1,3-hexadien, 3-Ethyl-1,3,5-hexatrien, 3-Ethyl-4-vinyl-1,3,5-hexatrien, 3,4-Diethyl-1,3,5-hexatrien, 3-Vinyl-4-ethyl-1,3-hexadien, 3-Methyl-1,3-hexadien, 4-Methyl-1,3-hexadien, 3-Ethyl-1,3-pentadien, 3-Ethyl-4-methyl-1,3-pentadien, 3,4-Dimethyl-1,3-hexadien, 3-Methyl-4-ethyl-1,3-hexadien, 3-Ethyl-4-methyl-1,3-hexadien, 3-Methyl-4-ethyl-1,3,5-hexatrien, 3-Vinyl-4-methyl-1,3-hexadien und 1,4-pentadien ist.

4. Optisches Erzeugnis nach Anspruch 1, worin ie Kohlenwasserstoffverbindung ein cyclischer ungesättigter Kohlenwasserstoff ist.

5. Optisches Erzeugnis nach Anspruch 4, worin der cyclische ungesättigte Kohlenwasserstoff ein aromatischer Kohlenwasserstoff ist.

6. Optisches Erzeugnis nach Anspruch 5, worin der aromatisches Kohlenwasserstoff mindestens einer aus der Reihe Benzol, Toluol, Ethylbenzol, Propylbenzol, Cumol, Butylbenzol, Xylol, Ethyltoluol, Cymol, Diethylbenzol, Trimethylbenzol, Tetramethylbenzol, Styrol, Methylstyrol, Allylbenzol, Divinylbenzol und 1-Phenyl-1,3-butadien ist.

7. Optisches Erzeugnis nach Anspruch 4, worin der cyclische ungesättigte Kohlenwasserstoff ein alicyclischer ungesätigter Kohlenwasserstoff ist.

8. Optisches Erzeugnis nach Anspruch 7, worin der alicyclische Kohlenwasserstoff mindestens einer aus der Reihe Cyclopenten, Cyclopentadien, Fulven, Cyclohexen, Methylcyclohexen, Cyclohexadien, Cyclobuten, Cyclooctatetraen, Menthen, Limonen, Di-penten, Terpinolen, Terpinen, Phellandren, Sylvestren, Caren, Pinen and Bornylen ist.

9. Optisches Erzeugnis nach einem der voranstehenden Ansprüche, worin das molare Verhältnis der Kohlenwasserstoffverbindung zu Sauerstoff 0,1:1 bis 10:1 beträgt.

10. Optisches Erzeugnis nach einem der voranstehenden Ansprüche, worin die Gasmischung 80 Mol% oder weniger von einem anorganischen Gas enthält, das von Sauerstoff verschieden ist.

11. Optisches Erzeugnis nach einem der voranstehenden Ansprüche, welches der Transmission, Refraktion oder Reflexion von Licht dient.

12. Optisches Erzeugnis nach Anspruch 11 als Kontaktlinse oder intraokkulare Linse.

## Revendications

1. Produit optique comportant sur sa surface une fine pellicule obtenue en soumettant und mélange gazeux comprenant de l'oxygène et un composé hydrocarboné ayant au moins une double liaison à une polymérisation par plasma en présence dudit produit optique, formant ainsi une pellicule fine d'un produit de réaction de ladite polymérisation par plasma sur la surface du produit optique.

2. Produit optique selon la revendication 1, dans lequel le composé hydrocarboné est un hydrocarbone, aliphatique insaturé représenté par la formule générale:

$$R^1—C(R^2)=(R^3)C—R^4$$

dans laquelle $R^1$, $R^2$, $R^3$ et $R^4$ qui peuvent être identiques ou différents représentent chacun un atome d'hydrogène, un groupe alkyle ou un groupe alcényle.

3. Produit optique selon la revendication 2, dans lequel l'hydrocarbure aliphatique insaturé est au moins l'un parmi:

éthylène, propylène, 2-buténe, isobutylène, 2-méthyle-2-butené, 2,3-diméthyle-2-butène, 1-butène, 3-hexène, 2-éthyle-1-butène, 3-éthyl-3-hexène, 3,4-diéthyl-3-hexène, 1-3-butadiène, 1,3,5-hexatriène, 2-vinyl-1,3-butadîne, 3-vinyl-1,3,5-hexatriène, 3,4-divinyl-1,3,5-hexatriène, 2-pentène, 2-méthyl-1-butène, 2,3-diméthyl-2-pentène, 3-méthyl-3-hexène, 3-éthyl-2-pentène, 3-méthyl-4-éthyl-3-hexène, 2-méthyl-3-éthyl-2-pentène, 2,3-diméthyl-3-hexène, isoprène, 1,3-pentadiène, 3-méthyl-1,3-pentadîne, 4-méthyl-3,5-pentadiène, 3,4-diméthyl-1,3-pentadiène, 3-méthyl, 1,3,5-hexatriène, 3-vinyl-1,3-pentadiène, 3-méthyl-4-vinyl-1,3,5-hexatrîne, 3-vinyl-4-méthyl-1,3-pentadiène, 3,4-diméthyl-1,3,5-hexatriène, 1,3-hexadiène, 2-éthyl-1,3-butadiène, 3-éthyl-1,3-hexadiène, 4-éthyl-1,3-hexadiène, 3,4-dièthyl-1,3-hexadiène, 3-vinyl-1,3-hexadiène, 3-éthyl-1,3,5-hexatriène, 3-éthyl-4-vinyl-1,3,5-hexatriène, 3,4-diéthyl-1,3,5-hexatriène, 3-vinyl-4-éthyl-1,3-hexadiène, 3-méthyl-1,3-hexadiène, 4-méthyl-1,3-hexadiène, 3-éthyl-1,3-pentadiène, 3-éthyl-4-méthyl-1,3-pentadiène, 3,4-diméthyl-1,3-hexadiène, 3-méthyl-4-éthyl-1,3-hexadiène, 3-éthyl-4-méthyl-1,3-hexadiène, 3-méthyl-4-éthyl-1,3,5-hexatriène, 3-vinyl-4-méthyl-1,3-hexadiène et 1,4-pentadiène.

4. Produit optique selon la revendication 1, dans lequel le composé hydrocarboné est un hydrocarbure cyclique insaturé.

5. Produit optique selon la revendication 4, dans lequel l'hydrocarbure cyclique insaturé est un l'hydrocarbure aromatique.

6. Produit optique selon la revendication 5, dans lequel l'hydrocarbure aromatique est au moins l'un parmi: benzène, toluène, éthylbenzène, propylbenzène, cumène, butylbenzène, xylène, éthyltoluène, cymène, diéthylbenzène, triméthylbenène, tétraméthylbenzène, styrène, méthylstyrène, allylbenzène, divinylbenzène et 1-phényl-1,3-butadiène.

7. Produit optique selon la revendication 4, dans lequel l'hydrocarbure cyclique insaturé est un hydrocarbure alicyclique insaturé.

8. Produit optique selon la revendication 7, dans lequel l'hydrocarbure alicyclique est au moins l'un parmi: cyclopentène, cyclopentadiène, fulvène, cyclohexène, méthylcyclohexène, cyclohexadiène, cyclobutène, cyclooctatétraène, menthène, limonène, di-pentène, terpinolène, terpenène, phellandrène, sylvestrène, carène, pinène et bornène.

9. Produit optique selon l'une quelconque des revendications précédentes, dans lequel le rapport molaire du composé hydrocarboné à l'oxygène est de 0,1/1 à 10/1.

10. Produit optique selon l'une quelconque des revendications précédentes, dans lequel le mélange gazeux comprend 80% en moles ou moins d'un gaz inorganique différent de l'oxygène.

11. Produit optique selon l'une quelconque des revendications précédentes, se rapportant à la transmission, la réfraction ou la réflection de la lumière.

12. Produit optique selon la revendication 11, qui est une lentille de contact ou une lentille intraoculaire.

FIG. 1

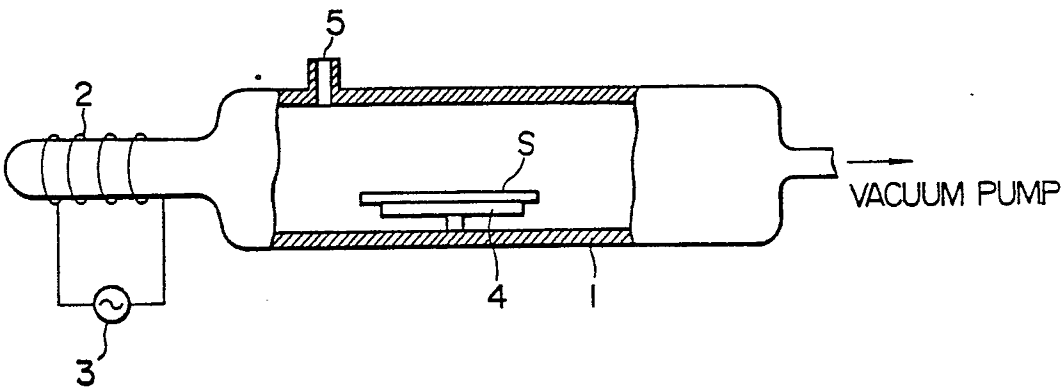


FIG. 2

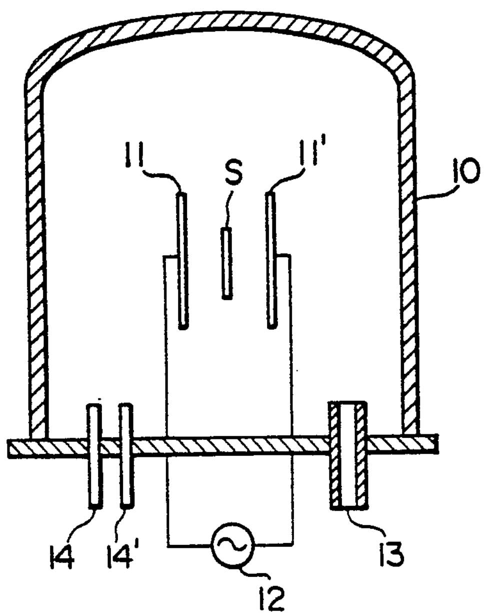

FIG. 3